Europäisches Patentamt

European Patent Office

Office européen des brevets

Numéro de publication: **0 297 691**

**A1**

## DEMANDE DE BREVET EUROPEEN

Numéro de dépôt: **88201644.7**

Date de dépôt: **11.06.87**

Int. Cl.⁴ **F04D 25/06 , F04D 27/02**

Date de publication de la demande:
**04.01.89 Bulletin 89/01**

Numéro de publication de la demande initiale
en application de l'article 76 CBE :

Etats contractants désignés:
**AT BE CH DE ES FR GB GR IT LI LU NL SE**

Demandeur: **ACEC, Société Anonyme**
**Avenue Lloyd George 7**
**B-1050 Bruxelles(BE)**

Inventeur: **van Gucht, Albert**
**Holleken Straat 110**
**B-9330 Dendermonde(BE)**
Inventeur: **Grimes, Paul J.**
**10497 Town & Country Way, Suite 500**
**Houston Texas 77024(US)**
Inventeur: **Mc Lean, George S.**
**10497 Town & Country Way, Suite 500**
**Houston Texas 77024(US)**

Mandataire: **van Malderen, Michel et al**
**p.a. FREYLINGER & ASSOCIES 85/042**
**Boulevard de la Sauvenière**
**B-4000 Liège(BE)**

**Ensemble moteur-compresseur.**

Ensemble moteur-compresseur caractérisé en ce qu'il comporte essentiellement un moteur électrique (5) du type asynchrone commandé à fréquence variable et au moins une roue (17, 19) de compresseur centrifuge monté en porte à faux sur l'arbre (11) dudit moteur (5).

FIG.1

EP 0 297 691 A1

# ENSEMBLE MOTEUR-COMPRESSEUR

## Objet de l'invention

La présente invention est relative à un ensemble moteur-compresseur et plus particulièrement un ensemble moteur-compresseur centrifuge.

## Etat de la technique

On sait que pour régler le débit et la pression de gaz sortant de groupes compresseurs électriques, il y a lieu de prévoir des vannes d'étranglement ou d'autres dispositifs créant des pertes de charge dans les conduits d'admission et ou d'évacuation. On conçoit aisément que cette manière de procéder est peu économique étant donné que les dispositifs utilisés consomment de l'énergie et réduisent notablement le rendement de l'installation.

## Buts de l'invention

Le but de l'invention vise à fournir un ensemble moteur-compresseur électrique à débit variable d'un type nouveau qui ne présente pas les inconvénients des groupes conformes à l'état de la technique.

Un autre but de la présente invention consiste à fournir un ensemble moteur-compresseur électrique comportant un compresseur équipé d'une roue centrifuge pour la compression de gaz, notamment un gaz explosif en mélange avec de l'oxygène, l'ensemble tournant dans une enceinte à haute pression.

Un autre but de la présente invention consiste à fournir un ensemble moteur-compresseur électrique destiné à compenser les demandes momentanément élevées en gaz.

## Eléments essentiels de l'invention.

L'ensemble moteur-compresseur conforme à la présente invention comporte essentiellement un moteur électrique asynchrone à fréquence variable et au moins une roue de compresseur centrifuge montée en porte à faux sur l'arbre dudit moteur.

Selon une forme d'exécution particulièrement préférée de la présente invention, l'ensemble moteur-compresseur comporte deux roues de compresseur centrifuge, montées chacune en porte à faux sur l'arbre du moteur, de chaque côté de celui-ci, les deux compresseurs étant reliés en série ou en parallèle.

La variation de la fréquence d'alimentation du moteur asynchrone permet de faire varier la vitesse de rotation de celui-ci et par conséquent aussi le débit à la sortie de la ou des roues de compresseur.

Alors que dans les installations classiques dans lesquelles le moteur tourne à vitesse constante il y a lieu de créer des pertes de charge pour réduire le débit, selon la présente invention il est possible de faire varier le débit en agissant sur la vitesse de rotation du moteur asynchrone, sans devoir intervenir sur les conduits d'alimentation ou d'évacuation.

Un autre avantage réside dans le fait qu'il est à présent possible de faire démarrer l'ensemble susmentionné sans devoir faire appel à un courant de démarrage de l'ordre de trois fois le courant nominal, en démarrant lentement le moteur asynchrone.

Les frais d'installation et d'entretien de l'ensemble moteur-compresseur conforme à la présente invention sont parmi les plus bas, par rapport à des installations de puissance comparable.

En outre, il permet une commande à distance aisée et peut être installé en bout de ligne puisque le courant au démarrage est faible.

Bien que la commande à fréquence variable puisse représenter une perte de rendement de l'ordre de 3%, le rendement global de l'installation de compresseur est plus élevé que celui des installations classiques, étant donné qu'il n'y a pas de boite de vitesse destinée à augmenter la vitesse de rotation des compresseurs.

Avantageusement, le moteur asynchrone à fréquence variable est refroidi par une partie du gaz comprimé par le ou les compresseurs montés en porte à faux. Ce gaz est alors guidé à travers les paliers de support de l'arbre du moteur, traverse le stator et est recyclé à l'admission du compresseur.

L'ensemble moteur-compresseur selon la présente invention est avantageusement intégré dans un carter étanche de sorte qu'il constitue un ensemble de grande sécurité.

Selon une forme d'exécution avantageuse, les paliers de support de l'arbre du moteur asynchrone ne nécessitent pas d'huile. Cette configuration empêche des arrêts intempestifs suite à l'usure des paliers et permet de maintenir le rendement global de l'installation à un niveau élevé puisqu'il n'est pas nécessaire, dans ce cas, de prévoir un système de graissage et de refroidissement externe.

Brève description des figures.

La présente invention est décrite plus en détail ci-dessous, en référence aux dessins annexés dans lesquels:

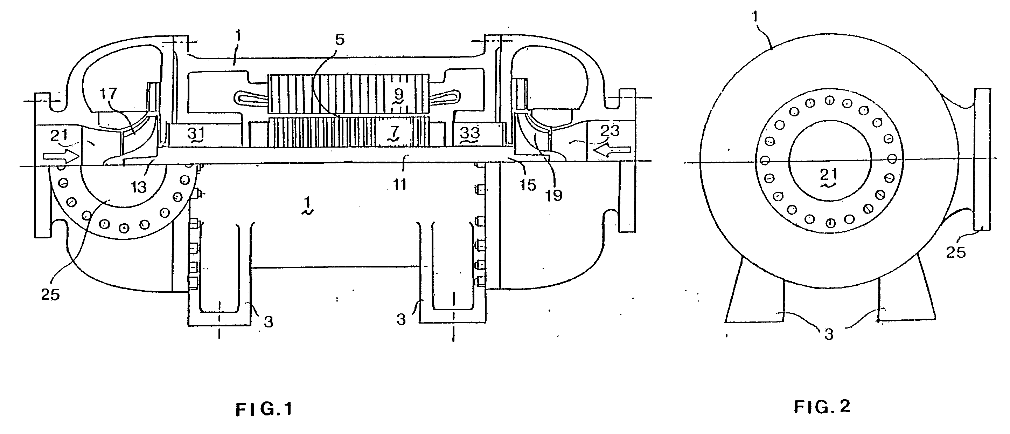

- la figure 1 est une vue schématique de profil, en coupe partielle;
- la figure 2 est une vue de face de l'ensemble moteur-compresseur selon la présente invention.

Description d'une forme d'exécution préférée.

Dans les figures, des repères identiques se réfèrent à des éléments identiques ou analogues.

Un carter étanche 1 muni de support 3 contient un moteur asynchrone 5 comportant un rotor 7 et un stator 9: le rotor est solidaire de l'arbre 11 qui porte à chacune de ses extrémités 13, 15, en porte à faux, une roue de compresseur 17, 19 avec l'admission 21, 23 et l'évacuation 25.

Le carter se compose de plusieurs parties assemblées de manière étanche de telle sorte qu'une partie du gaz comprimé serve simultanément de fluide de refroidissement du moteur asynchrone 5.

L'arbre du moteur est avantageusement supporté par des paliers dépourvus d'huile 31 et 33.

La commande à fréquence variable permet d'adapter la vitesse du moteur asynchrone au débit de gaz demandé aux compresseurs qui peuvent être montés en série ou en parallèle.

A titre d'exemple, on peut citer un moteur asynchrone à deux pôles commandé par fréquence variable et destiné à fonctionner dans la gamme de vitesse comprise entre 6000 et 12000 t min. Il est monté dans un carter étanche à une pression nominale de l'ordre de $1.10^7$ Pa. Le moteur asynchrone est d'une puissance de l'ordre de 5600 kW et entraîne deux roues de compresseur centrifuge montées en parallèle ou en série ayant un rendement jusqu'à 86%, avec des taux de remontée en pression entre 1,5 et 1.

Il est bien évident que la présente invention n'est pas limitée à la forme d'exécution préférée décrite à titre d'exemple, mais qu'elle s'étend au cadre défini par les revendications.

**Revendications**

1. Ensemble moteur-compresseur caractérisé en ce qu'il comporte essentiellement un moteur électrique (5) du type asynchrone commandé à fréquence variable et au moins une roue (17, 19) de compresseur centrifuge montée en porte à faux sur l'arbre (11) dudit moteur (5).

2. Ensemble moteur-compresseur selon la revendication 1 caractérisé en ce qu'il comporte deux roues de compresseur centrifuge (17, 19), montées chacune en porte à faux sur l'arbre (11) du moteur (5), de chaque côté de celui-ci, les deux compresseurs étant reliés en série ou en parallèle.

3. Ensemble moteur-compresseur selon l'une quelconque des revendications 1 ou 2 caractérisé en ce que le moteur asynchrone commandé à fréquence variable (5) est refroidi par une partie du gaz comprimé par le ou les compresseurs montés en porte à faux, ledit gaz étant guidé à travers des paliers de support (31, 33) de l'arbre (11) du moteur (5), traversant le stator (9) et étant recyclé à l'admission (21, 23) du ou des compresseurs.

4. Ensemble moteur-compresseur selon l'une quelconque des revendications précédentes caractérisé en ce que l'arbre du moteur asynchrone est logé dans des paliers (31, 33) dépourvus de liquide de lubrification.

5. Ensemble moteur-compresseur selon l'une quelconque des revendications précédentes caractérisé en ce qu'il est intégré dans un carter étanche.

FIG. 2

FIG.1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 511 312 (HARTWIG)<br>* Colonne 2, lignes 8-54; revendication 1; figure 1 * | 1 | F 04 D 25/06<br>F 04 D 27/02 |
| Y | | 2,3,5 | |
| Y | US-A-3 218 825 (THE TRANE CO.)<br>* Colonne 1, lignes 11-14,44-48; colonne 2, lignes 19-33; colonne 3, lignes 7-11; figure 1 * | 2,3,5 | |
| A | EP-A-0 099 803 (MOTEURS LEROY-SOMER)<br>* Page 7, lignes 10-22; page 9, lignes 1-5; page 10, lignes 1-11 * | 1 | |
| A | US-A-4 462 561 (LOCKHEED CORP.)<br>* Colonne 3, lignes 9-25; figure 3 * | 1,2 | |
| A | FR-A-1 220 926 (ARMSTRONG SIDDELEY MOTORS LTD)<br>* Page 1, colonne de droite, alinéa 2; page 4, colonne de droite, alinéa 3; figure 1 * | 3,4 | |

| DOMAINES TECHNIQUES RECHERCHES (Int. Cl.4) |
|---|
| F 04 D<br>H 02 K |

Le présent rapport a été établi pour toutes les revendications

| Lieu de la recherche | Date d'achèvement de la recherche | Examinateur |
|---|---|---|
| LA HAYE | 26-10-1988 | DIMITROULAS P. |